# EUROPÄISCHE PATENTANMELDUNG

(11) **EP 4 260 701 A1**
(43) Veröffentlichungstag der Anmeldung: **18.10.2023**
(21) Anmeldenummer: 23166518.3
(22) Anmeldetag: 04.04.2023
(51) Int. Cl.: A01M 7/00, A01M 21/04

(54) **LANDWIRTSCHAFTLICHE VERTEILMASCHINE UND VERFAHREN ZUM AUSBRINGEN VON LANDWIRTSCHAFTLICHEM VERTEILGUT**

(30) Priorität: 14.04.2022 DE 102022109227
(71) Anmelder: HORSCH LEEB Application Systems GmbH, 94405 Landau an der Isar (DE)
(72) Erfinder: LEEB, Theodor, 94405 Landau an der Isar (DE)
(74) Vertreter: v. Bezold & Partner Patentanwälte - PartG mbB

(57) **Zusammenfassung**

Die Erfindung betrifft eine Landwirtschaftliche Verteilmaschine (10), zum Ausbringen von landwirtschaftlichem Verteilgut, vorzugsweise Feldspritze oder pneumatischer Düngerstreuer, mit einer Vielzahl von Verteilelementen (22), sowie mit einer Bestimmungseinrichtung (60), welche dazu eingerichtet ist, Positionen von Kulturpflanzen (54), vorzugsweise Positionen von Kulturpflanzenreihen (54a-54l) auf der landwirtschaftlichen Nutzfläche (50) zu bestimmen, und Positionen einzelner oder gruppenweiser Schadbewuchspflanzen (56), die sich vorzugsweise in Zwischenräumen zwischen zwei quer zur Fahrtrichtung (FR) benachbarten und in Fahrtrichtung (FR) verlaufenden Kulturpflanzenreihen (54a-54l) befinden, zu bestimmen, zudem mit einer Steuereinrichtung, welche eingerichtet ist, die Verteilung des Verteilgut zu steuern. Erfindungsgemäß ist vorgesehen, dass die Steuereinrichtung eingerichtet ist, zur kombinierten Verteilung des Verteilgut während einer Überfahrt, die Verteilelemente (22) die in Fahrtrichtung (FR) entlang der Kulturpflanzen (54) bewegt werden, vorzugsweise entlang der Kulturpflanzenreihen (54a-54l) bewegt werden, derartig zu steuern, dass entlang dieser und in Abhängigkeit der Positionen der Kulturpflanzen (54) eine Verteilung von Verteilgut kontinuierlich oder diskontinuierlich erfolgt und die Verteilelemente (22) in den Zwischenräumen einzeln oder gruppenweise in Abhängigkeit der Positionen der Schadbewuchspflanzen (56) derartig zu steuern, dass eine Verteilung von Verteilgut diskontinuierlich erfolgt.

Die Erfindung betrifft zudem ein Verfahren zum Ausbringen von landwirtschaftlichem Verteilgut.

## Beschreibung

Die Erfindung betrifft eine landwirtschaftliche Verteilmaschine zum Ausbringen von landwirtschaftlichem Verteilgut, insbesondere eine Feldspritze oder einen pneumatischer Düngerstreuer. Die Erfindung betrifft zudem ein Verfahren zum Ausbringen von landwirtschaftlichem Verteilgut.

Zur Verteilung von landwirtschaftlichen Verteilgütern wie bspw. flüssigen oder festen Pflanzenschutzmitteln, Dünger oder dergl. werden landwirtschaftliche Verteilmaschinen wie bspw. Feldspritzen, pneumatische Düngersteuer oder dergl. eingesetzt, welche in der Regel eine Vielzahl von an einem Verteilgestänge angeordnete Verteilelemente, wie bspw. Spritzdüsen, aufweisen.

Um die benötigte Menge an Verteilgütern, d.h. um bspw. die benötigte Menge an Pflanzenschutzmitteln so weit wie möglich zu reduzieren und jeweils nur derartige Pflanzen, respektive Pflanzenreihen zu besprühen für welche das jeweilige Pflanzenschutzmittel vorgesehen ist, werden zunehmend Verteilmaschinen eingesetzt, mittels welchen eine Applikation an jeweils vorhandene Pflanzenreihen angepasst werden kann und mittels denen bspw. zwischen einer reihenabhängigen Streifenapplikation (z.B. auch als Bandapplikation bezeichnet) oder einer reihenunabhängigen Flächenapplikation gewechselt werden kann.

Eine Verteilmaschine welche für eine Bandapplikation eingesetzt werden kann, wurde bspw. durch die US 5 279 068 A bereits aus dem Stand der Technik bekannt. Die Verteilmaschine ist als Feldspritze ausgeführt und umfasst eine Bestimmungseinrichtung, welche dazu eingerichtet ist, Pflanzenreihen auf einer landwirtschaftlichen Nutzfläche zu bestimmen, eine Verstelleinrichtung, mittels welcher der Auftreffbereich der von einer oder mehreren Spritzdüsen abgegebenen Spritzflüssigkeit auf der landwirtschaftlichen Nutzfläche während des Verteilvorganges veränderbar ist und eine Steuereinrichtung, welche dazu eingerichtet ist, die Verstelleinrichtung in Abhängigkeit der durch die Bestimmungseinrichtung erfassten Pflanzenreihen auf der landwirtschaftlichen Fläche während des Ausbringvorganges zu steuern. Mittels der aus dem Stand der Technik bekannten Maschine ist somit eine reihenabhängige kontinuierliche Verteilung von Pflanzenschutzmittel entlang von Pflanzenreihen möglich. Wobei eine Verteilung unabhängig von einem Vorhandensein von Kulturpflanzen oder Schadbewuchspflanzen jeweils dauerhaft erfolgt und somit ggf. eine zu große Menge an Verteilgut eingesetzt wird.

Die der Erfindung zugrundeliegende Aufgabe besteht somit darin, eine effektive, verteilguteinsparende Verteilung von landwirtschaftlichem Verteilgut zu ermöglichen, insbesondere besteht die der Erfindung zugrundeliegende Aufgabe darin, eine Verteilmaschine zur Verfügung zu stellen, mittels welcher bei einer Überfahrt sowohl eine reihenabhängige als auch eine positionsabhänge Verteilung von landwirtschaftlichem Verteilgut ermöglicht wird.

Diese Aufgaben der Erfindung werden gelöst durch eine landwirtschaftliche Verteilmaschine mit den Merkmalen des unabhängigen Anspruch 1, sowie durch ein Verfahren mit den Merkmalen des Verfahrensanspruch 15. Vorteilhafte Ausführungsformen und Weiterbildungen der Erfindung sind in den abhängigen Ansprüchen und der nachfolgenden Beschreibung angegeben.

Gemäß einem ersten Aspekt der Erfindung wird eine landwirtschaftliche Verteilmaschine zum Ausbringen von landwirtschaftlichem Verteilgut bereitgestellt.

Das landwirtschaftliche Verteilgut kann bspw. flüssiges oder granulares Verteilgut sein oder ein in einer Flüssigkeit gelöstes Granulat sein. Insbesondere kann das Verteilgut ein Pflanzenschutzmittel, Düngemittel, Saatgut oder dergl. sein.

Die landwirtschaftliche Verteilmaschine kann vorzugsweise eine Feldspritze oder ein pneumatischer Düngerstreuer sein.

Die Verteilmaschine umfasst eine Vielzahl von Verteilelementen welche beabstandet zueinander entlang einer Längserstreckung eines Verteilgestänge an diesem angeordnet sind und dazu eingerichtet sind, das Verteilgut auf einer landwirtschaftlichen Nutzfläche (z.B. Ackerfläche, Pflanzenbestand auf einer Ackerfläche oder dergl.) auszubringen.

Die Verteilelemente können bspw. bei einer Verteilmaschine in Form einer Feldspritze als Spritzdüsen ausgebildet sein und eingerichtet sein einen Spritzfächer, Spritzstrahl oder dergl. zu erzeugen. Die Verteilelementen können bspw. bei einer Verteilmaschine in Form eines pneumatischen Düngerstreuer als Prallelemente ausgebildet sein und eingerichtet sein einen Streufächer oder dergl. zu erzeugen. Insbesondere können die Verteilelemente jeweils eingerichtet sein, das jeweilige Verteilgut zu zerstäuben.

Das Verteilgestänge kann in einer Arbeitsstellung sich in einer großen Arbeitsbreite, d.h. in einer großen Längserstreckung, von bspw. 18 Meter, 21 Meter oder mehr quer zur Fahrtrichtung der Verteilmaschine erstrecken. Das Verteilgestänge kann bspw. ein Spritzgestänge sein. Auch kann das Verteilgestänge bspw. durch eine Fachwerkkonstruktion gebildet sein.

Die Verteilmaschine umfasst zudem eine Bestimmungseinrichtung, welche dazu eingerichtet ist, Positionen von Kulturpflanzen (z.B. Getreide wie Mais, Weizen oder dergl.), vorzugsweise Positionen von Kulturpflanzenreihen auf der landwirtschaftlichen Nutzfläche zu bestimmen. Zudem ist die Bestimmungseinrichtung dazu eingerichtet ist, Positionen einzelner oder gruppenweiser Schadbewuchspflanzen (z.B. Unkraut, Beiwuchs oder dergl.), die sich vorzugsweise in Zwischenräumen zwischen zwei quer zur Fahrtrichtung benachbarten und in Fahrtrichtungen verlaufenden Kulturpflanzenreihen befinden, zu bestimmen.

Darüber hinaus umfasst die Verteilmaschine eine Steuereinrichtung, welche dazu eingerichtet ist, die Verteilung des Verteilgut, vorzugsweise durch ein Aktivieren oder Deaktivieren von Verteilelementen zu steuern. Ein Aktivieren oder Deaktivieren von Verteilelementen kann bspw. mittels den Verteilelementen zugeordneten Ventilen erfolgen, welche eine Abgabe von Verteilgut mittels der Verteilelemente aktivieren oder deaktivieren und/oder die eine Weiterleitung von Verteilgut aus einem Leitungssystem zu den Verteilelementen durch ein Aktivieren oder Deaktivieren zu ermöglichen oder nicht. Ein Aktivieren oder Deaktivieren von Verteilelementen kann alternativ oder ergänzend eine Aktivierung oder Deaktivierung einer Dosierung des Verteilgut umfassen.

Um eine effektive, verteilguteinsparende Verteilung von landwirtschaftlichem Verteilgut zu ermöglichen ist erfindungsgemäß vorgesehen, dass die Steuereinrichtung zudem dazu eingerichtet ist, zur kombinierten Verteilung des Verteilgut während einer Überfahrt, die Verteilelemente die in Fahrtrichtung entlang der mittels der Bestimmungseinrichtung bestimmten Kulturpflanzen bewegt werden, vorzugsweise entlang der Kulturpflanzenreihen bewegt werden, derartig zu steuern, dass entlang dieser und in Abhängigkeit der Positionen der Kulturpflanzen eine Verteilung von Verteilgut wahlweise kontinuierlich oder diskontinuierlich erfolgt und die Verteilelemente die in Fahrtrichtung entlang der Zwischenräume bewegt werden einzeln oder gruppenweise in Abhängigkeit der mittels der Bestimmungseinrichtung bestimmten Positionen der Schadbewuchspflanzen derartig zu steuern, dass eine Verteilung von Verteilgut diskontinuierlich erfolgt.

Infolge der erfindungsgemäßen Maßnahmen wird demnach eine Verteilmaschine geschaffen, bei welcher anhand von bestimmten, d.h. bspw. sensorisch bestimmten Positionen von Schadbewuchspflanzen oder Kulturpflanzen mittels der Verteilmaschine eine Verteilung des Verteilgut jeweils kontinuierlich oder diskontinuierlich, d.h. bspw. in verschiedenen Intervallen erfolgen kann, wodurch eine an die jeweiligen Bedingungen angepasste Verteilung des Verteilgut auf der landwirtschaftlichen Nutzfläche ermöglicht wird. Insbesondere kann mittels der Erfindungsgemäßen Maßnahmen die benötigte Menge an Verteilgut wesentlich reduziert werden, da eine positionsgenaue und Pflanzenabhängige Verteilung des Verteilgut erfolgt.

Mittels der erfindungsgemäßen Verteilmaschine kann insbesondere die Effizienz der Verteilung dadurch erhöht werden, dass sowohl für eine Verteilung von Verteilgut entlang von Kulturpflanzenreihen als auch in den Zwischenbereichen lediglich eine Überfahrt mit der Verteilmaschine benötigt wird, da die Verteilung entsprechend kombiniert erfolgen kann.

Zweckmäßig kann mittels der Verteilmaschine in einer Überfahrt entlang der Kulturpflanzenreihen eine Bandapplikation (kontinuierliche Verteilung) des Verteilgut durchgeführt werden. Zusätzlich ist es möglich, dass während der gleichen Überfahrt in den Zwischenbereichen eine sog. Spot-Spraying Applikation (diskontinuierliche Verteilung) des Verteilgut durchgeführt wird.

Es sei darauf hingewiesen, dass auch bei einer Bandapplikation, d.h. das auch bei einer Verteilung des Verteilgut entlang von Kulturpflanzenreihen, Bestandslücken vorhanden sein können, die wiederum mittels der Bestimmungseinrichtung bestimmt werden können, wobei es möglich ist, dass in diesem Fall die Verteilung von einer kontinuierlichen zu einer diskontinuierlichen Verteilung des Verteilgut wechselt.

Erfindungsgemäß ist es möglich, dass ein Wechsel einer kontinuierlichen und einer diskontinuierlichen Verteilung des Verteilgut in Kulturpflanzenreihen anhand einer bestimmten Regelmäßigkeit des Vorhandenseins von Kulturpflanzen erfolgt. Wird bspw. eine Regelmäßigkeit bestimmt, was bspw. bedeutet kann, dass keine Bestandslücken vorhanden sind, erfolgt eine kontinuierliche Verteilung. Wird hingegen eine Unregelmäßigkeit bestimmt, was bspw. auf eine Bestandslücke hinweist, erfolgt eine diskontinuierliche Verteilung.

Kontinuierlich im Sinne der Erfindung kann insbesondere eine über einen längeren Zeitraum von bspw. 0,5 Minuten oder 1 Minute oder mehr ununterbrochene Verteilung des Verteilgut mittels eines Verteilelement umfassen, demgegenüber definiert diskontinuierlich im Sinne der Erfindung insbesondere eine kurzzeitige bspw. nur wenige Sekunden dauernde Verteilung des Verteilgut mittels eines Verteilelement.

Vorzugsweise können die Verteilelemente jeweils eine Zerstäubungscharakteristik aufweisen und bspw. eingerichtet sein, einen Spritzkegel, Streukegel, Spritzfächer, Streufächer und/oder dergl. zu erzeugen. Es sei darauf hingewiesen, dass im vorliegenden die Definition Streufächer oder Spritzfächer sowohl die Verteilung von flüssigen oder granularen Verteilgütern und insbesondere jegliche Zerstäubungscharakteristiken oder Verteilbilder umfassen kann.

Die Verteilung entlang der Kulturpflanzenreihen und in den Zwischenbereichen erfolgt insbesondere in unterschiedlichen Breiten der Auftreffbereiche der mittels der Verteilelemente erzeugten Streufächer, Spritzfächer oder dergl., um dies zu erreichen, kann vorgesehen sein, dass entlang der Kulturpflanzenreihen maximal zwei in Längserstreckung des Verteilgestänge benachbart angeordnete Verteilelemente steuerbar sind und dass in den Zwischenbereichen zwei oder mehr in Längserstreckung des Verteilgestänge benachbart angeordnete Verteilelemente steuerbar sind. Wobei es zudem möglich ist, dass die Verteilelemente in Bereichen der Kulturpflanzenreihen und die Verteilelemente in den Zwischenbereichen jeweils mittels der Steuereinrichtung zu Gruppen zusammenfassbar sind und entsprechend anhand der Positionen der Kulturpflanzen und/oder der Positionen der Schadbewuchspflanzen kontinuierlich oder diskontinuierlich steuerbar sind.

In einer bevorzugten Ausführungsform der landwirtschaftlichen Verteilmaschine ist vorgesehen, dass die Verteilelemente derartig am Verteilgestänge angeordnet und/oder ausgebildet sind und/oder mit einem oder mehreren Vorratsbehälter wirktechnisch gekoppelt (z.B. fluidisch verbunden) sind, dass entlang der Kulturpflanzenreihen gegenüber den Zwischenbereichen unterschiedliche Arten von Verteilgut (z.B. entlang der Kulturpflanzenreihen - Düngemittel und in den Zwischenbereichen - Pflanzenschutzmittel wie bspw. Unkrautvernichtungsmittel) verteilbar sind (d.h. im Betrieb verteilt werden) und/oder unterschiedliche Ausbringmengen des Verteilgut je Flächeneinheit verteilbar sind (d.h. im Betrieb verteilt werden) und/oder unterschiedliche Breiten der Streufächer oder Spritzfächer erzeugbar sind (d.h. im Betrieb erzeugt werden). Somit ist es zweckmäßig möglich, dass für Kulturpflanzen und für Schadbewuchspflanzen jeweils das geforderte Verteilgut in einer geforderten Menge und/oder einer geforderten Ausbringart ausgebracht werden kann. Wobei es auch möglich ist, dass in den Zwischenbereichen in Abhängigkeit des bestimmten Schadbewuchs unterschiedliche Arten von Verteilgut verteilbar sind und/oder unterschiedliche Ausbringmengen des Verteilgut je Flächeneinheit verteilbar sind und/oder unterschiedliche Breiten der Streufächer oder Spritzfächer erzeugbar sind.

Gemäß einer besonders bevorzugten Ausführungsform der Verteilmaschine unterscheiden sich die kontinuierliche und die diskontinuierliche Verteilung des Verteilgut durch eine unterschiedliche Anzahl an aktivierten Verteilelemente, eine unterschiedliche Ausführung der aktivierten Verteilelemente, eine unterschiedliche Zeit in der die Verteilelemente aktiviert sind, eine unterschiedliche Ausbringmenge an Verteilgut je Flächeneinheit, und/oder eine unterschiedliche Breite der Auftrefffläche des Verteilgut auf der landwirtschaftlichen Nutzfläche (z.B. durch unterschiedlich erzeugte Streufächer oder Spritzfächer).

Unterschiedliche Ausführungen der Verteilelemente im Sinne der Erfindung können vorzugsweise erreicht werden durch Verteilelementen die sich in deren Zerstäubungscharakteristik und/oder Verteilcharakteristik zueinander unterscheiden.

Es ist möglich, dass unterschiedliche Breiten der Streufächer oder Spritzfächer, respektive dass unterschiedlichen Breiten der Auftreffflächen des Verteilgut auf der landwirtschaftlichen Nutzfläche durch unterschiedlich ausgeführte Verteilelemente erzeugt werden. Es ist alternativ oder ergänzend möglich, dass die unterschiedlichen Breiten durch eine unterschiedliche Höhenlage des Verteilgestänge mit welcher dieses entlang der landwirtschaftlichen Nutzfläche bewegt wird erzeugt werden.

Unterschiedliche Breiten der Auftreffflächen des Verteilgut können gemäß einer bevorzugten Ausführungsvariante erreicht werden, durch Verteilelemente die jeweils Streufächer oder Spritzfächer mit unterschiedlichen Sprühwinkel ausbilden.

Vorzugsweise kann vorgesehen sein, dass die Bestimmungseinrichtung zur Bestimmung von Positionen von Kulturpflanzen, vorzugsweise von Positionen von Kulturpflanzenreihen und/oder zur Bestimmung von Positionen einzelner oder gruppenweiser Schadbewuchspflanzen eingerichtet ist, manuelle Bedienereingaben zu verarbeiten und/oder Ausgangssignale von Sensoranordnungen zu verarbeiten und/oder optische Anzeigen von optischen Erfassungseinrichtungen (z.B. Sensoren, Kameras und/oder dergl.) zu verarbeiten und/oder Ausgangssignale eines Positionsbestimmungssystem (z.B. Satellitengestützes System wie bspw. GPS-System) zu verarbeiten.

Die Bestimmungseinrichtung kann bspw. einen oder mehrere, identische oder gleiche Sensoren, Kamerasysteme oder dergl. umfassen.

Gemäß einer Weiterbildung der Verteilmaschine ist es möglich, dass die Bestimmungseinrichtung eingerichtet ist als Online-System und/oder als Offline-System Positionen zu bestimmen. Wobei ein Online-System durch an der Verteilmaschine angebaute Bestimmungseinrichtungen umgesetzt werden kann und wobei ein Offline-System durch bspw. ein Positionsbestimmungssystem oder durch nicht an der Verteilmaschine angebaute Bestimmungseinrichtungen umgesetzt werden kann.

Alternativ oder ergänzend kann vorgesehen sein, dass die Bestimmungseinrichtung zur Bestimmung von Kulturpflanzen insbesondere von Kulturpflanzenreihen und/oder einzelner oder gruppenweiser Schadbewuchspflanzen eingerichtet ist, unterschiedliche Farbtöne zu detektieren. Somit kann die Bestimmungseinrichtung bspw. eingerichtet sein, durch eine bspw. grün - braun Erfassung sich von der Bodenfläche unterscheidende Farbtöne zu detektieren und diese als Kulturpflanzen oder Schadbewuchspflanzen zu bestimmen.

Eine Weiterbildung der Erfindung kann vorsehen, dass die Bestimmungseinrichtung eingerichtet ist, zur Bestimmung einzelner oder gruppenweiser Schadbewuchspflanzen, eine Gesamtgröße der Schadbewuchspflanzen zu bestimmen, wobei die Steuereinrichtung vorzugsweise eingerichtet ist, basierend auf der Gesamtgröße die Verteilelemente die in Fahrtrichtung entlang der Zwischenräume bewegt werden einzeln oder gruppenweise zu steuern. Befinden sich somit bspw. an einer Position zwei oder mehr Schadbewuchspflanzen oder sehr große Schadbewuchspflanzen werden mittels der Steuereinrichtung basierend auf der sich hiermit ausgebildeten Gesamtgröße bspw. ein, zwei oder mehr Verteilelemente entsprechend gesteuert.

Die Steuereinrichtung kann optional eingerichtet sein, anhand einer bestimmten Position einzelner oder gruppenweiser Schadbewuchspflanzen die sich in den Zwischenräumen befinden und durch eine Berechnung der Lage dieser Positionen gegenüber den am Verteilgestänge angeordneten Verteilelementen, die Verteilelemente einzeln oder gruppenweise und diskontinuierlich zu steuern, mittels der die bestimmten Schadbewuchspflanzen zumindest weitgehend ganzflächig mit Verteilgut bedeckt werden. Alternativ oder ergänzend ist es möglich, dass die Steuereinrichtung eingerichtet ist, anhand einer erfassten Position von Kulturpflanzen, vorzugsweise von Kulturpflanzenreihen und durch eine Berechnung der Lage dieser gegenüber den am Verteilgestänge angeordneten Verteilelementen die Verteilelemente kontinuierlich oder diskontinuierlich zu steuern, mittels der die Kulturpflanzen, vorzugsweise die Kulturpflanzenreihen in gewünschter Weise mit Verteilgut bedeckt werden. Somit werden jeweils lediglich die Verteilelemente gesteuert, mittels denen ein gewünschtes Verteilergebnis optimiert erreichbar ist.

Eine bevorzugte Weiterbildung der Verteilmaschine sieht vor, dass zur kombinierten Verteilung des Verteilgut während einer Überfahrt, bei einer Fahrt in Fahrtrichtung entlang der Kulturpflanzenreihen dauerhaft die gleichen Verteilelemente mittels der Steuereinrichtung kontinuierlich oder diskontinuierlich steuerbar sind und/oder entlang der Zwischenräume in Längserstreckung des Verteilgestänge mittels der Steuereinrichtung wechselnde Verteilelemente diskontinuierlich steuerbar sind. Somit wird insbesondere entlang der Kulturpflanzenreihen eine Bandapplikation verbessert und in den Zwischenbereichen eine Spot-Spraying-Applikation verbessert.

Eine verbesserte Verteilung des Verteilgut kann gemäß einer Weiterbildung der Verteilmaschine dadurch erreicht werden, dass eine Verteilung des Verteilgut entlang der Kulturpflanzenreihen quer zur Fahrtrichtung wahlweise derartig erfolgt, dass Verteilelemente aktiviert sind die einen Auftreffbereich auf den Kulturpflanzen aufweisen oder einen Auftreffbereich neben den Kulturpflanzen aufweisen. Somit können wahlweise bspw. Verteilelemente aktiviert werden die sich senkrecht oberhalb der Kulturpflanzenreihe befinden oder die sich quer zur Fahrtrichtung versetzt, vorzugsweise unmittelbar angrenzend, gegenüber den Kulturpflanzenreihen befinden.

Eine bevorzugte Weiterbildung der Verteilmaschine sieht vor, dass die Verteilelemente in deren Lage quer zur Fahrtrichtung und/oder in Fahrtrichtung derartig veränderbar sind, dass ein Auftreffbereich des Verteilgut auf die landwirtschaftliche Nutzfläche veränderbar ist. Alternativ oder ergänzend kann die Lage des Verteilgestänge quer zur Fahrtrichtung und/oder in Fahrtrichtung derartig veränderbar sein, dass ein Auftreffbereich des mittels der Verteilelemente ausgebrachten Verteilgut auf die landwirtschaftliche Fläche veränderbar ist. Die Verteilelemente und/oder das Verteilgestänge kann/können zur Veränderung der Lage (z.B. Winkeländerung gegenüber dem Verteilgestänge) bspw. mit einer Verstelleinrichtung (z.B. hydraulischer und/oder pneumatischer Zylinder, Lenkzylinder zur Lenkung der Verteilmaschine) und/oder dergl. gekoppelt sein. Insbesondere ist es möglich, dass die Steuereinrichtung eingerichtet ist, anhand der mittels der Bestimmungseinrichtung bestimmen Positionen von Kulturpflanzen, vorzugsweise von Positionen von Kulturpflanzen auf der landwirtschaftlichen Nutzfläche und/oder der mittels der Bestimmungseinrichtung bestimmten Positionen einzelner oder gruppenweiser Schadbewuchspflanzen auf der landwirtschaftlichen Nutzfläche die Lage der Verteilelemente und/oder des Verteilgestänge quer zur Fahrtrichtung und/oder in Fahrtrichtung jeweils derartig zu verändern, dass ein optimaler, d.h. gewünschter Auftreffbereich des Verteilgut auf die Kulturpflanzen und/oder den Schadbewuchs erreicht wird.

Zur Anpassung des Auftreffbereich können bspw. die Verteilelemente einzeln oder gruppenweise mittels einer oder mehreren Verstelleinrichtungen schwenkbar am Verteilgestänge gelagert sein. Alternativ oder ergänzend kann zur Anpassung des Auftreffbereich das Verteilgestänge mittels einer Verstelleinrichtung bspw. quer zur Fahrtrichtung verschwenkbar sein. Alternativ oder ergänzend kann eine Anpassung des Auftreffbereich durch eine Lenkung der Verteilmaschine erfolgen.

Im Kontext der Erfindung umfasst die Definition entlang der Kulturpflanzenreihen insbesondere eine Verteilung von Verteilgut senkrecht oberhalb dieser oder quer zur Fahrtrichtung unmittelbar angrenzend an diese.

Um eine optimierte und flexible Versorgung der Verteilelemente mit dem jeweils erforderlichen Verteilgut zu ermöglichen kann eine Weiterbildung der Verteilmaschine vorsehen, dass zur Versorgung der Verteilelemente mit dem Verteilgut, die Verteilelemente die in Fahrtrichtung entlang der Kulturpflanzen bewegt werden mit zumindest einem ersten Leitungssystem und/oder die Verteilelemente die in Fahrtrichtung entlang der Zwischenräume bewegt werden zumindest mit einem zweiten Leitungssystem wirktechnisch gekoppelt sind, wobei die Leitungssysteme jeweils mittels einer, mittels der Steuereinrichtung steuerbaren und/oder regelbaren Fördereinrichtung mit einem veränderbaren Förderdruck beaufschlagbar sind. Der Förderdruck kann bspw. in einem Bereich zwischen 0,5 Bar und 6 Bar liegen. Ein veränderbarer Förderdruck hat vorzugsweise den Vorteil, dass der Förderdruck an jeweilige verwendete Verteilelemente (z.B. eine Anzahl und/oder eine entsprechende Bauart) angepasst werden kann, um somit wiederum bspw. optimierte Spritzfächer oder Streufächer zu erhalten.

Zur Anpassung des Förderdruck ist es zweckmäßig bspw. möglich, dass die Steuereinrichtung eingerichtet ist, die Fördereinrichtung, insbesondere einen Antriebsmotor der Fördereinrichtung mit veränderbarer Antriebsdrehzahl zu betreiben, wobei es möglich ist, dass bei einem Wechsel der aktivierten Verteilelemente eine automatisierte Erhöhung (z.B. bei Erhöhung der Anzahl der aktivierten Verteilelemente) oder Verringerung (z.B. bei Verringerung der Anzahl an aktivierten Verteilelementen) der Antriebsdrehzahl mittels der Steuereinrichtung initiiert wird.

Eine alternative oder ergänzende Ausführungsvariante der Erfindung kann vorsehen, dass der Förderdruck in den Leitungssystemen unterschiedlich ist, vorzugsweise im ersten Leitungssystem größer oder kleiner ist als der Förderdruck im zweiten Leitungssystem, wobei den Leitungssystemen jeweils zumindest eine Messeinrichtung zugeordnet ist und die Steuereinrichtung dazu eingerichtet ist, den Förderdruck in den Leitungssystemen anhand eines Ausgangssignals der Messeinrichtung zu steuern.

Um unterschiedlichste Arten von Verteilgut ausbringen zu können ist es vorzugsweise möglich, dass das Verteilgut im Leitungssystem durch ein Direkteinspeisesystem erzeugt (z.B. vermengt, vermischt oder dergl.) wird, vorzugsweise dass das Verteilgut im ersten Leitungssystem und/oder im zweiten Leitungssystem durch ein Direkteinspeisesystem erzeugt wird.

Alternativ oder ergänzend ist es möglich, dass das Leitungssystem als Ringleitungssystem ausgeführt ist, vorzugsweise dass das erste Leitungssystem und/oder das zweite Leitungssystem als Ringleitungssystem ausgeführt sind.

Alternativ oder ergänzend kann vorgesehen sein, dass die Verteilelemente jeweils mit den Leitungssystemen vorzugsweise mit dem ersten Leitungssystem und dem zweiten Leitungssystem gekoppelt sind, wobei die Steuereinrichtung mittels der Steuereinrichtung steuerbare und/oder regelbar Ventile umfasst und die Steuereinrichtung eingerichtet ist, die Ventile derartig zu steuern und/oder zu regeln um die Verteilelemente mit dem Verteilgut des ersten Leitungssystem und/oder dem zweiten Leitungssystem zu versorgen. Somit kann wiederum jedes Verteilelement mit dem Verteilgut versorgt werden, welches für eine optimale effiziente Verteilung benötigt wird, insbesondere in Abhängigkeit davon, ob bspw. mittels dem jeweiligen Verteilelement eine Verteilung entlang von Kulturpflanzenreihen oder in Zwischenbereichen erfolgt.

Eine bevorzugte Weiterbildung der landwirtschaftlichen Verteilmaschine kann vorsehen, dass die Ventile der Leitungssysteme mittels der Steuereinrichtung jeweils derartig steuerbar und/oder regelbar sind, dass eine Versorgung der Verteilelemente mit dem jeweiligen Verteilgut der Leitungssysteme, d.h. bspw. des ersten Leitungssystem und/oder des zweiten Leitungssystem in Abhängigkeit der Lage des jeweiligen Verteilelement erfolgt. Somit ist es bspw. möglich, dass bspw. eine Auswertung erfolgt, ob bspw. ein jeweiliges Verteilelement entlang einer Kulturpflanzenreihe bewegt wird oder entlang des Zwischenbereich bewegt wird und somit wiederum entsprechend definiert werden, welches Verteilgut für das jeweilige Verteilelement benötigt wird. Eine Auswertung kann bspw. durch eine manuelle Bedienereingabe erfolgen und/oder automatisiert mittels der Steuereinrichtung erfolgen.

Auch eine Versorgung der Verteilelemente mit Verteilgut sowohl aus dem ersten Leitungssystem als auch aus dem zweiten Leitungssystem ist denkbar, wobei die Anteile des Verteilgut wiederum gleich oder unterschiedlich sein können. Auch mehr als zwei Leitungssystem sind möglich und vorstellbar.

Wie bereits beschrieben kann zweckmäßig entlang der Kulturpflanzenreihen eine Bandapplikation des Verteilgut durchgeführt werden. Zusätzlich ist es möglich, dass in den Zwischenbereichen eine sog. Spot-Spraying Applikation durchgeführt wird. Wobei es gemäß einer Weiterbildung der Erfindung zudem möglich ist, dass die Steuereinrichtung dazu eingerichtet ist, dass insofern keine Bestimmung von Kulturpflanzenreihen und/oder von Schadbewuchspflanzen mittels der Bestimmungseinrichtung möglich ist, die Verteilelemente derartig zu steuern, dass eine ganzflächige Applikation des Verteilgut auf die landwirtschaftliche Nutzfläche ausgeführt wird, vorzugsweise eine Kulturpflanzenreihen und/oder Schadbewuchspflanzen unabhängige Verteilung des Verteilgut ausgeführt wird. Wird bspw. die Verteilmaschine in Richtung eines Vorgewendes bewegt und ist somit bspw. keine Bestimmung von Kulturpflanzenreihen mehr möglich, werden die Verteilelemente derartig angesteuert, dass eine ganzflächige Verteilung des Verteilgut erfolgt, d.h. dass die gesamte landwirtschaftliche Nutzfläche mit Verteilgut bearbeitet wird. Wobei hierbei vorzugsweise eine Versorgung der Verteilelemente mit dem Verteilgut welches für die Behandlung der Kulturpflanzenreihen vorgesehen ist, erfolgen kann.

Gemäß einem weiteren Aspekt der Erfindung wird ein Verfahren zum Ausbringen von landwirtschaftlichem Verteilgut, vorzugsweise mittels einer landwirtschaftlichen Verteilmaschine, insbesondere mittels einer Feldspritze oder einem pneumatischen Düngerstreuer, bereitgestellt.

Das Verfahren umfasst ein Ausbringen von Verteilgut auf einer landwirtschaftlichen Nutzfläche mittels einer Vielzahl von Verteilelementen welche beabstandet zueinander entlang einer Längserstreckung eines Verteilgestänge an diesem angeordnet sind.

Zudem umfasst das Verfahren ein Bestimmen von Positionen von Kulturpflanzen, vorzugsweise von Positionen von Kulturpflanzenreihen auf der landwirtschaftlichen Nutzfläche, sowie ein Bestimmen von Positionen einzelner oder gruppenweiser Schadbewuchspflanzen, die sich vorzugsweise in Zwischenräumen zwischen zwei quer zur Fahrtrichtung benachbarten und in Fahrtrichtung verlaufenden Kulturpflanzenreihen befinden, mittels einer Bestimmungseinrichtung.

Des Weiteren umfasst das Verfahren ein Steuern der Verteilung mittels der Verteilelemente durch eine Aktivierung oder Deaktivierung von Verteilelementen mittels einer Steuereinrichtung.

Das erfindungsgemäße Verfahren ist gekennzeichnet durch, eine derartige Ansteuerung der Verteilelemente zur kombinierten Verteilung des Verteilgut während einer Überfahrt, dass durch die Verteilelemente die in Fahrtrichtung entlang der Kulturpflanzen bewegt werden, vorzugsweise entlang der Kulturpflanzenreihen bewegt werden, eine Verteilung von Verteilgut in Abhängigkeit der mittels der Bestimmungseinrichtung bestimmten Positionen der Kulturpflanzen wahlweise kontinuierlich oder diskontinuierlich erfolgt und dass durch einzelne oder gruppenweise Verteilelemente die in Fahrtrichtung entlang der Zwischenräume bewegt werden in Abhängigkeit der mittels der Bestimmungseinrichtung bestimmten Positionen der Schadbewuchspflanzen eine Verteilung des Verteilgut diskontinuierlich erfolgt.

In einer bevorzugten Ausführungsform des erfindungsgemäßen Verfahrens ist dieses mit einer landwirtschaftlichen Verteilmaschine nach einer der vorstehend beschriebenen Ausführungsformen, insbesondere mit einer Feldspritze oder einem pneumatischen Düngerstreuer nach einer der vorstehend beschriebenen Ausführungsformen ausführbar.

Bevorzugt werden alle Schritte des erfindungsgemäßen Verfahrens während einer Überfahrt, d.h. während einer einzigen Überfahrt der Verteilmaschine über der landwirtschaftlichen Nutzfläche ausgeführt.

Hinsichtlich der Vorteile und Ausführungsformen des erfindungsgemäßen Verfahrens wird auf die Vorteile und Ausführungsformen der erfindungsgemäßen landwirtschaftlichen Verteilmaschine verwiesen.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung ausgebildet ist. Welche Signal- und/oder Befehlsübertragung auch drahtlos (z.B. mittels WLAN) erfolgen kann.

Im Kontext der Erfindung umfasst die Definition Steuereinrichtung, insbesondere die Gesamtheit der Bauteile zur Signal- und/oder Befehlsübertragung. Dementsprechend auch Rechnereinheiten, CPU's und/oder dergl. Ebenso umfasst sind entsprechend auch in den jeweiligen Sensoren oder Sensoreinheiten oder Sensoranordnungen integrierte Steuereinrichtungen. Ebenso sei darauf hingewiesen, dass die Signale und/oder Daten der Sensoren / Messeinrichtungen / Bestimmungseinrichtungen und/oder dergl. jeweils als Rückkoppelung für eine Steuer- und/oder Regelgröße herangezogen werden können.

Es sei noch darauf hingewiesen, dass die Begriffe "Steuern" und "Regeln" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Zur Vermeidung von Wiederholungen sei darauf hingewiesen, dass die erfindungsgemäßen Ausführungsformen und Merkmale in beliebiger Weise und Frei mit der landwirtschaftlichen Verteilmaschine und/oder dem Verfahren kombinierbar sind. Dementsprechend sind alle Ausführungsformen und erfindungsgemäßen Merkmale sowohl für die landwirtschaftliche Verteilmaschine als auch für das Verfahren offenbart und beanspruchbar.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1: eine Ausführungsvariante einer landwirtschaftlichen Verteilmaschine in Form einer Feldspritze,
- Figur 2: eine Ausführungsvariante der erfindungsgemäßen landwirtschaftlichen Verteilmaschine während einer Verteilung von Verteilgut in einer schematischen Draufsicht,
- Figuren 3A bis 3C: ein Verteilgestänge einer erfindungsgemäßen landwirtschaftlichen Verteilmaschine mit unterschiedlich angesteuerten Verteilelementen in einer schematischen Darstellung,
- Figur 4A: über ein Leitungssystem wirktechnisch gekoppelte Verteilelemente in einer schematischen Darstellung,
- Figur 4B: über zwei Leitungssysteme wirktechnisch gekoppelte Verteilelemente in einer schematischen Darstellung.

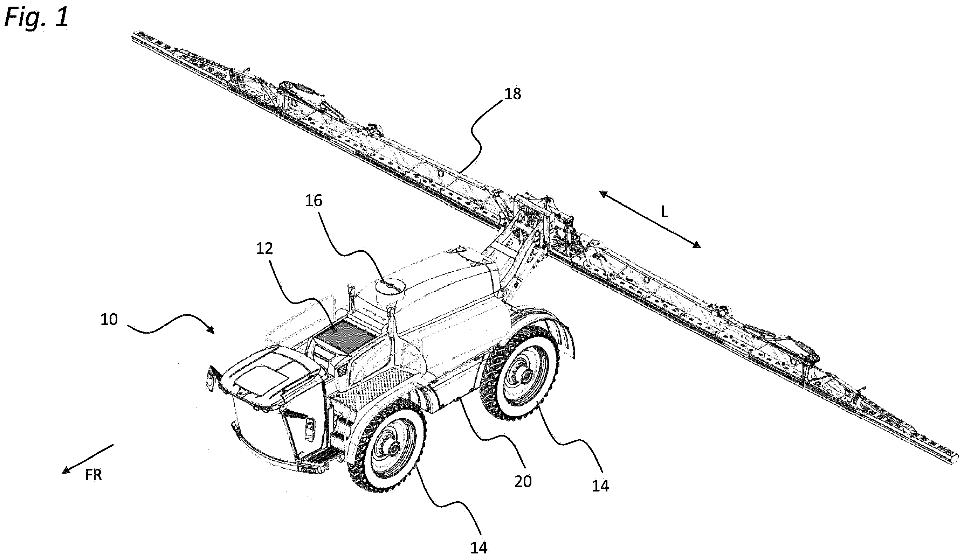

Die in den Figuren 1 bis 4 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Figur 1 zeigte eine Ausführungsvariante einer landwirtschaftlichen Verteilmaschine 10 in Form einer Feldspritze. Die Verteilmaschine 10 ist als selbstfahrende Verteilmaschine 10 mit Antrieb 12 und Fahrwerk 14 ausgeführt, könnte jedoch alternativ auch als mittels einer Zugmaschine gezogene oder als eine an einem Zugfahrzeug angebaute Verteilmaschine ausgeführt sein. Auch könnte die Verteilmaschine als pneumatischer Düngerstreuer ausgeführt sein.

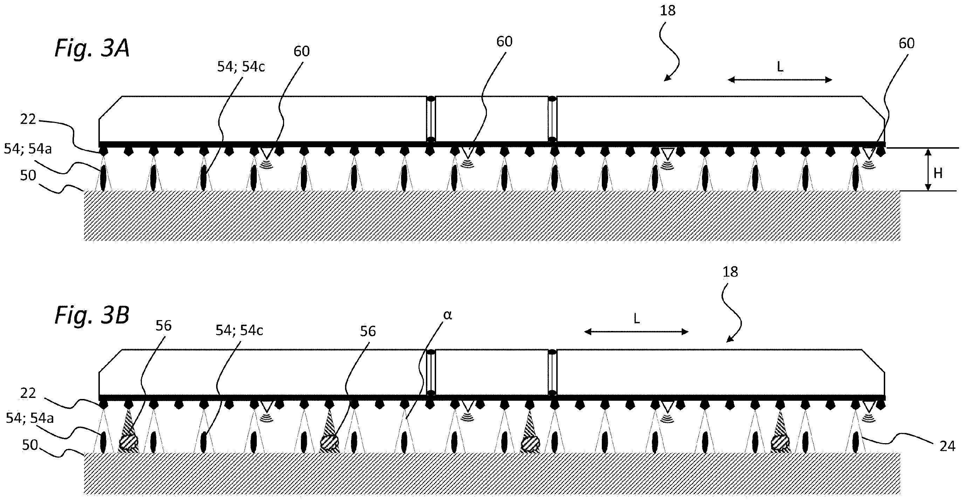

Zum Mitführen des jeweiligen zu verteilenden landwirtschaftlichen Verteilgut umfasst die Verteilmaschine 10 zumindest einen Vorratsbehälter 16. Zudem umfasst die Verteilmaschine 10 ein sich in großer Längserstreckung L (z.B. Arbeitsbreite von bspw. 21 Meter oder mehr), quer zur Fahrtrichtung FR erstreckendes Verteilgestänge 18. Das Verteilgestänge 18 ist mittels einer Parallelogrammanordnung in dessen Höhenlage H (vergl. Figur 3A) verstellbar gegenüber einer landwirtschaftlichen Nutzfläche, respektive einer Zielfläche wie bspw. einem Kulturpflanzenbestand, an einer Rahmenkonstruktion 20 der Verteilmaschine 10 gelagert. Gemäß der Figur 1 ist das Verteilgestänge 18 ein durch eine Fachwerkkonstruktion gebildetes Spritzgestänge.

Die Verteilmaschine 10 dient zweckmäßig zur Verteilung landwirtschaftlicher Verteilgüter wie bspw. flüssigem oder granularem Pflanzenschutzmittel, Düngemittel, Saatgut oder dergl. auf einer landwirtschaftlichen Nutzfläche 50.

Die Verteilmaschine 10 ist zweckmäßig vorzugsweise dazu eingerichtet ein Verfahren wie in diesem Dokument beschrieben auszuführen.

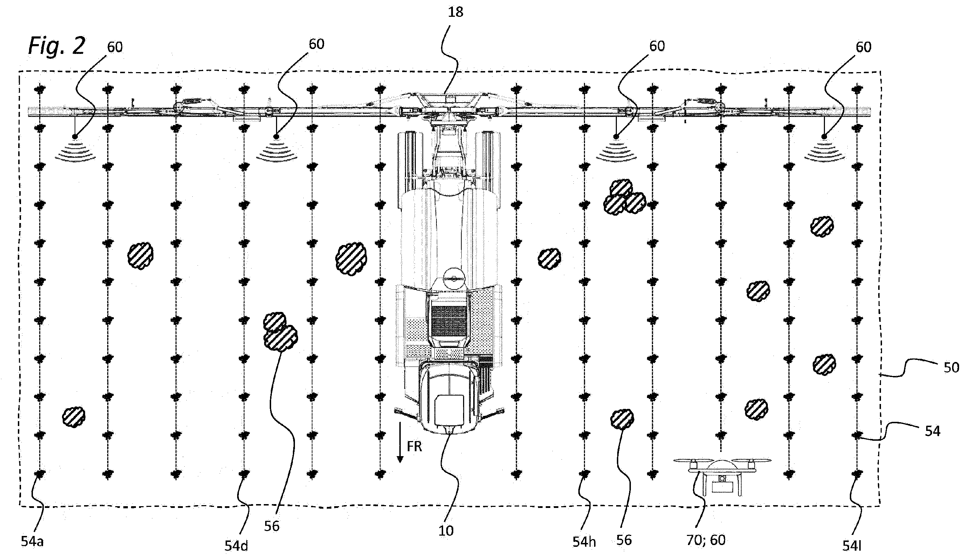

Die Figuren 2 bis 3C zeigen unterschiedliche Ansichten von Ausführungsbeispielen einer Verteilung von Verteilgut auf einer landwirtschaftlichen Nutzfläche 50, die unter gemeinsamer Bezugnahme auf die Figuren 2 bis 3C beschrieben werden.

Figur 2 zeigt hierbei insbesondere ein Ausführungsbeispiel der erfindungsgemäßen landwirtschaftlichen Verteilmaschine 10 während der Verteilung von Verteilgut auf einer landwirtschaftlichen Nutzfläche 50 in einer schematischen Draufsicht. Die Figuren 3A bis 3C zeigen jeweils in einer schematischen Darstellung ein Verteilgestänge 18 einer erfindungsgemäßen landwirtschaftlichen Verteilmaschine mit unterschiedliche angesteuerten Verteilelementen 22.

Das Verteilgestänge 18 wird jeweils mit einer identischen Höhenlage H entlang der landwirtschaftlichen Nutzfläche 50 bewegt, die Höhenlage H kann jedoch auch steuerbar sein und insbesondere in Abhängigkeit des Wachstumsstadium der Kulturpflanzen 54 und/oder der Abstände der Kulturpflanzenreihen 54a-54l zueinander steuerbar sein.

Auf der landwirtschaftlichen Nutzfläche 50 befinden sich eine Vielzahl von parallelen durch Kulturpflanzen 54 gebildete, sich durch die Aussaat ergebende Kulturpflanzenreihen 54a - 541. Entlang dieser wird die Verteilmaschine 10 in Fahrtrichtung FR bewegt. Auf der landwirtschaftlichen Nutzfläche 50 befindet sich zudem, in unterschiedlicher Anzahl und Größe, d.h. einzeln oder gruppenweise Schadbewuchspflanzen 56 (z.B. Unkrautpflanzen). Insbesondere befinden sich Schadbewuchspflanzen 56 in Zwischenräumen zwischen zwei quer zur Fahrtrichtung FR benachbarten und in Fahrtrichtungen FR verlaufenden Kulturpflanzenreihen 54a - 541.

Am Verteilgestänge 18 sind entlang von dessen Längserstreckung L (im Betrieb quer zur Fahrtrichtung FR orientiert) eine Vielzahl von Verteilelementen 22 beabstandet zueinander angeordnet, wobei die Verteilelemente 22 zweckmäßig dazu eingerichtet sind, das Verteilgut auf der landwirtschaftlichen Nutzfläche 50 auszubringen.

Die Verteilelemente 22 erzeugen jeweils einen Spritzfächer 24 durch welchen bspw. eine Breite einer Auftrefffläche des Verteilgut auf der landwirtschaftlichen Nutzfläche definiert sein kann, wobei die Verteilelemente hierfür bspw. einen Spritzfächer mit einen Sprühwinkel α ausbilden, welcher Sprühwinkel bspw. in Abhängigkeit der Art (d.h. der Bauart) des Verteilelement 22 variieren kann.

Zur Bestimmung von Positionen von Kulturpflanzen 54, vorzugsweise von Positionen von Kulturpflanzenreihen 54a - 54l und/oder zur Bestimmung von Positionen einzelner oder gruppenweiser Schadbewuchspflanzen 56 ist eine Bestimmungseinrichtung 60 vorgesehen.

Zum Steuern der Verteilung des Verteilgut, was vorzugsweise durch ein Aktivieren oder Deaktivieren von Verteilelementen 22 erfolgen kann ist zudem zweckmäßig eine Steuereinrichtung vorgesehen.

Erfindungsgemäß ist insbesondere vorgesehen, dass die Steuereinrichtung zudem dazu eingerichtet ist, zur kombinierten Verteilung des Verteilgut während einer Überfahrt, die Verteilelemente 22 die in Fahrtrichtung FR entlang der Kulturpflanzen 54 bewegt werden, vorzugsweise entlang der Kulturpflanzenreihen 54a-54l bewegt werden, derartig zu steuern, dass entlang dieser und in Abhängigkeit der mittels der Bestimmungseinrichtung 60 bestimmten Positionen der Kulturpflanzen 54 eine Verteilung von Verteilgut kontinuierlich oder diskontinuierlich erfolgt und die Verteilelemente 22 die entlang der Zwischenräume bewegt werden einzeln oder gruppenweise in Abhängigkeit der mittels Bestimmungseinrichtung bestimmten Positionen der Schadbewuchspflanzen 56 derartig zu steuern, dass eine Verteilung von Verteilgut diskontinuierlich erfolgt.

Wie insbesondere aus den Figuren 3A und 3B hervorgeht, kann zweckmäßig entlang der Kulturpflanzenreihen 54a - 54l eine Bandapplikation (z.B. kontinuierliche Verteilung) des Verteilgut durchgeführt werden. Zusätzlich kann somit zweckmäßig in den Zwischenbereichen eine sog. Spot-Spraying-Applikation (z.B. diskontinuierliche Verteilung) durchgeführt werden, d.h. dass in den Zwischenbereichen nur Verteilgut ausgebracht wird, insofern auch Schadbewuchspflanzen 56 vorhanden sind.

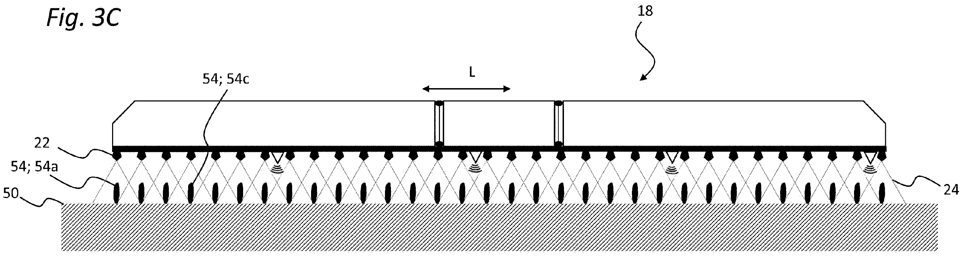

Darüber hinaus ist es gemäß der Figur 3C mit der Erfindungsgemäßen Verteilmaschine 10 zudem möglich, dass insofern keine Kulturpflanzenreihen 54a-54l und/oder Zwischenbereiche mittels der Bestimmungseinrichtung 60 erfassbar, d.h. bestimmbar sind, eine ganzflächige Applikation des Verteilgut auf die landwirtschaftliche Nutzfläche 50 ausgeführt wird, vorzugsweise eine Kulturpflanzenreihen 54a-54l und/oder Schadbewuchspflanzen 56 unabhängige Verteilung des Verteilgut ausgeführt wird. Wobei hierbei zudem die mittels der Verteilelemente 22 erzeugten Spritzfächer 24 überlappen können.

Gemäß der Ausführungsbeispiele ist jeweils im Bereich der Kulturpflanzenreihen 54a-54l und in den Zwischenbereichen ein Verteilelement 22 vorgesehen. Es wäre jedoch auch denkbar, dass entlang der Kulturpflanzenreihen 54a-54l maximal zwei in Längserstreckung L des Verteilgestänge 18 benachbart angeordnete Verteilelemente 22 steuerbar sind und das in den Zwischenbereichen zwei oder mehr in Längserstreckung L des Verteilgestänge 18 benachbarte Verteilelemente 22 steuerbar sind.

Es ist auch möglich, dass entlang der Kulturpflanzenreihen 54a -54l und in den Zwischenbereichen unterschiedliche Arten von Verteilgut mit unterschiedlichen Ausbringmengen je Flächeneinheit und/oder mit unterschiedlich ausgebildeten Verteilelementen 22 verteilt werden, was gemäß den Figuren durch unterschiedlich schraffiert dargestellte Streufächer 24 (z.B. bei pneumatischen Düngerstreuer), respektive Spritzfächer 24 (z.B. bei Feldspritze) dargestellt wird.

Die Bestimmungseinrichtung kann eingerichtet sein, Positionen im Online-System zu bestimmen, wobei diese hierfür bspw. an der Verteilmaschine 10, insbesondere am Verteilgestänge 18 angebaut sein kann. Alternativ oder ergänzend kann die Bestimmungseinrichtung 60 eingerichtet sein, Positionen im Offline-System zu bestimmen, wobei diese hierfür bspw. an einer Drohne 70 montiert sein kann.

Gemäß den Figuren befindet sich jeweils ein Verteilelement 22 senkrecht oberhalb der Kulturpflanzenreihen 54a-54l wobei es mit der erfindungsgemäßen Verteilmaschine 10 auch möglich ist, dass eine Verteilung des Verteilgut entlang der Kulturpflanzenreihen 54a - 54l in Fahrtrichtung FR wahlweise derartig erfolgt, dass Verteilelemente 22 aktiviert sind die einen Auftreffbereich auf den Kulturpflanzen 54 aufweisen oder einen Auftreffbereich neben, d.h. vorzugsweise unmittelbar angrenzend neben den Kulturpflanzen 54 aufweisen.

Gemäß den Figuren befindet sich jeweils ein Verteilelement 22 senkrecht oberhalb der Kulturpflanzenreihen 54a - 54l und senkrecht mittig in den Zwischenbereichen, wobei es auch denkbar wäre, dass die Verteilelemente 22 quer zur Fahrtrichtung FR (d.h. in Längserstreckung L des Verteilgestänge 18) versetzt zu den Kulturpflanzenreihen 54a - 54l angeordnet sind und/oder nicht mittig in den Zwischenbereichen angeordnet sind. Um hierbei dennoch eine optimierte Verteilung des Verteilgut zu ermöglichen ist es zudem möglich, dass die Steuereinrichtung eingerichtet ist, anhand einer erfassten Position einzelner oder gruppenweiser Schadbewuchspflanzen 56 die sich in Zwischenräumen befinden durch eine Berechnung die Lage dieser gegenüber den am Verteilgestänge 18 angeordneten Verteilelementen 22 zu bestimmen, wobei die Steuereinrichtung vorzugsweise eingerichtet ist, hierauf basierend Verteilelemente 22 einzeln oder gruppenweise derartig zu steuern, dass die Schadbewuchspflanzen zumindest weitgehend ganzflächig mit Verteilgut bedeckt werden.

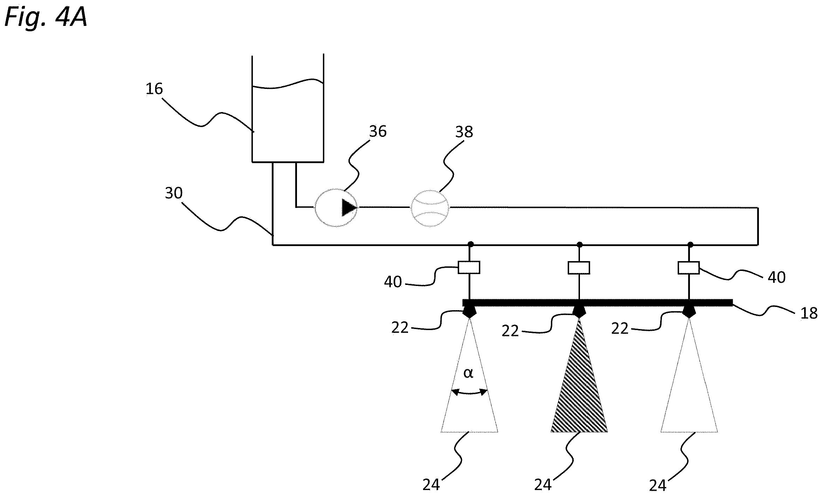

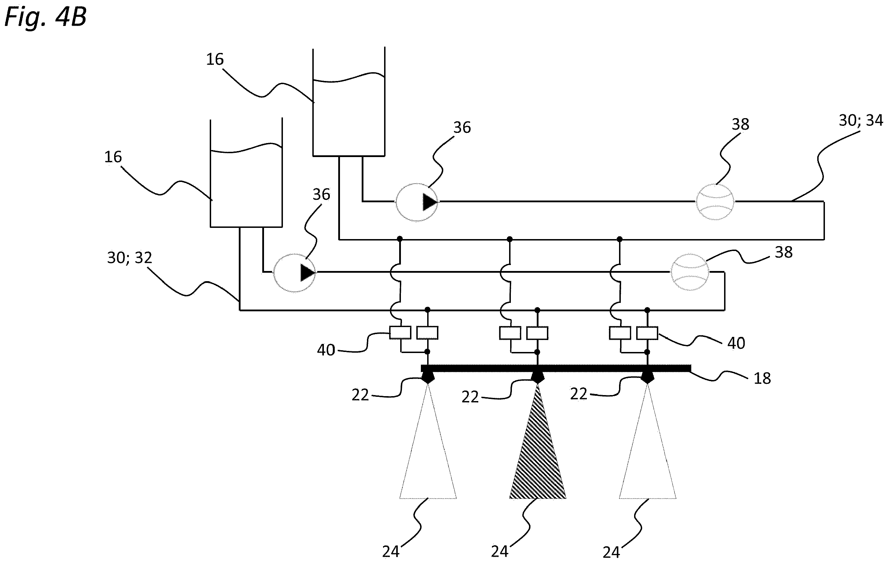

Figur 4A zeigt Verteilelemente 22 die mit einem Leitungssystem 30 wirktechnisch gekoppelt sind, d.h. zweckmäßig fluidisch gekoppelt sind. Figur 4B zeigt zudem Verteilelemente 22 die über zwei Leitungssysteme, vorzugsweise über ein erstes Leitungssystem 32 und ein zweites Leitungssystem 34 wirktechnisch gekoppelt sind.

Die Leitungssysteme 30; 32; 34; weisen jeweils einen Vorratsbehälter 16 zum Mitführen und Bereitstellen des jeweiligen Verteilgut auf. Die Leitungssysteme 30; 32; 34 sind zudem jeweils als sog. Ringleitungssysteme ausgeführt, was zweckmäßig insbesondere bedeutet, dass diese einen geschlossenen Kreislauf bilden.

Gemäß den Figuren erzeugen die Verteilelemente 22 unterschiedliche Spritzfächer 24, was bspw. durch unterschiedliche Arten von Verteilelementen 22 und/oder unterschiedlichen Förderdrücken in den Leitungssystemen 30; 32; 34 erreicht werden kann.

Gemäß einer Weiterbildung der Erfindung ist es jedoch auch denkbar, dass zur Versorgung der Verteilelemente 22 mit dem Verteilgut die Verteilelemente 22 die in Fahrtrichtung entlang der Kulturpflanzenreihen 54a-54l bewegt werden mit einem ersten Leitungssystem 32 und die Verteilelemente 22 die in Fahrtrichtung entlang der Zwischenräume bewegt werden mit einem zweiten Leitungssystem 34 wirktechnisch gekoppelt sind, wobei die Leitungssysteme 32; 34 jeweils mittels einer, mittels der Steuereinrichtung steuerbaren und/oder regelbaren Fördereinrichtung 36 (z.B. Pumpe) mit einem veränderbaren Förderdruck (z.B. 0,5 Bar bis 6 Bar) beaufschlagbar sind.

Insbesondere ist es möglich, dass der Förderdruck im ersten Leitungssystem 32 größer oder kleiner ist als der Förderdruck im zweiten Leitungssystem 34, wobei den Leitungssystemen 30; 32; 34, vorzugsweise dem ersten Leitungssystem 32 und dem zweiten Leitungssystem 34 jeweils zumindest eine Messeinrichtung 38 zugeordnet ist und die Steuereinrichtung dazu eingerichtet ist, den Förderdruck in den Leitungssystemen 30; 32; 34, d.h. im ersten Leitungssystem 32 und im zweiten Leitungssystem 34 anhand eines Ausgangssignals der Messeinrichtung 38 zu steuern.

Die Vorratsbehälter 16 der Leitungssysteme 30; 32; 34 können bspw. unterschiedliche Verteilgüter Mitführen und Bereitstellen. Auch ist es denkbar, dass das Verteilgut in den Leitungssystemen 30; 32; 34, vorzugsweise im ersten Leitungssystem 32 und/oder im zweiten Leitungssystem 34, durch ein Direkteinspeisesystem erzeugt wird.

Zum Steuern der Verteilelemente 22, insbesondere zum Aktivieren oder Deaktivieren der Verteilelemente 22 können diesen zudem jeweils mittels einer Steuereinrichtung entsprechend steuerbare und/oder regelbare Ventile 40 zugeordnet sein. Gemäß der Figur 4B ist es insbesondere vorgesehen, dass die Verteilelemente 22 jeweils mit dem ersten Leitungssystem 32 und dem zweiten Leitungssystem 34 gekoppelt sind und die Steuereinrichtung mittels Ventilen 40 eingerichtet ist, die Verteilelemente 22 mit dem Verteilgut des ersten Leitungssystem 32 und/oder dem zweiten Leitungssystem 34 zu versorgen, oder anteilig sowohl mit dem Verteilgut des ersten Leitungssystem 32 als auch mit dem Verteilgut des zweiten Leitungssystem 34 zu versorgen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 10: landwirtschaftliche Verteilmaschine
- 12: Antrieb
- 14: Fahrwerk
- 16: Vorratsbehälter
- 18: Verteilgestänge
- 20: Rahmenkonstruktion
- 22: Verteilelement
- 24: Streufächer, Spritzfächer

- 30: Leitungssystem
- 32: erstes Leitungssystem
- 34: zweites Leitungssystem
- 36: Fördereinrichtung
- 38: Messeinrichtung
- 40: Ventil
- 50: Nutzfläche
- 54: Kulturpflanze
- 54a-54l: Kulturpflanzenreihe
- 56: Schadbewuchspflanze

- 60: Bestimmungseinrichtung
- 70: Drohne

- L: Längserstreckung
- FR: Fahrtrichtung
- H: Höhenlage
- α: Sprühwinkel

## Patentansprüche

1. Landwirtschaftliche Verteilmaschine (10), zum Ausbringen von landwirtschaftlichem Verteilgut, vorzugsweise Feldspritze oder pneumatischer Düngerstreuer, mit
- einer Vielzahl von Verteilelementen (22) welche beabstandet zueinander entlang einer Längserstreckung (L) eines Verteilgestänge (18) an diesem angeordnet sind und dazu eingerichtet sind, das Verteilgut auf einer landwirtschaftlichen Nutzfläche (50) auszubringen,
- einer Bestimmungseinrichtung (60), welche dazu eingerichtet ist, Positionen von Kulturpflanzen (54), vorzugsweise Positionen von Kulturpflanzenreihen (54a-54l) auf der landwirtschaftlichen Nutzfläche (50) zu bestimmen, und welche dazu eingerichtet ist, Positionen einzelner oder gruppenweiser Schadbewuchspflanzen (56), die sich vorzugsweise in Zwischenräumen zwischen zwei quer zur Fahrtrichtung (FR) benachbarten und in Fahrtrichtung (FR) verlaufenden Kulturpflanzenreihen (54a-54l) befinden, zu bestimmen,
- einer Steuereinrichtung, welche dazu eingerichtet ist, die Verteilung des Verteilgut, vorzugsweise durch ein Aktivieren oder Deaktivieren von Verteilelementen (22) zu steuern,
**dadurch gekennzeichnet, dass** die Steuereinrichtung zudem dazu eingerichtet ist, zur kombinierten Verteilung des Verteilgut während einer Überfahrt,
- die Verteilelemente (22) die in Fahrtrichtung (FR) entlang der mittels der Bestimmungseinrichtung (60) bestimmten Kulturpflanzen (54) bewegt werden, vorzugsweise entlang der Kulturpflanzenreihen (54a-54l) bewegt werden, derartig zu steuern, dass entlang dieser und in Abhängigkeit der Positionen der Kulturpflanzen (54) eine Verteilung von Verteilgut kontinuierlich oder diskontinuierlich erfolgt und
- die Verteilelemente (22) die in Fahrtrichtung (FR) entlang der Zwischenräume bewegt werden einzeln oder gruppenweise in Abhängigkeit der mittels der Bestimmungseinrichtung bestimmten Positionen der Schadbewuchspflanzen (56) derartig zu steuern, dass eine Verteilung von Verteilgut diskontinuierlich erfolgt.

2. Verteilmaschine (10) nach Anspruch 1, **dadurch gekennzeichnet, dass** entlang der Kulturpflanzenreihen (54a-54l) maximal zwei in Längserstreckung (L) des Verteilgestänge (18) benachbart angeordnete Verteilelemente (22) steuerbar sind und dass in den Zwischenbereichen zwei oder mehr in Längserstreckung (L) des Verteilgestänge (18) benachbart angeordnete Verteilelemente (22) steuerbar sind.

3. Verteilmaschine (10) nach einem der vorherigen Ansprüche, **dadurch gekennzeichnet, dass** die Verteilelemente (22) derartig am Verteilgestänge (18) angeordnet und/oder ausgebildet sind und/oder mit einem oder mehreren Vorratsbehälter (16) wirktechnisch gekoppelt sind, dass entlang der Kulturpflanzenreihen (54a-54l) gegenüber den Zwischenbereichen
- unterschiedliche Arten von Verteilgut verteilbar sind und/oder
- unterschiedliche Ausbringmengen des Verteilgut je Flächeneinheit verteilbar sind und/oder
- unterschiedliche Breiten der Streufächer oder Spritzfächer erzeugbar sind.

4. Verteilmaschine (10) nach einem der vorherigen Ansprüche, **dadurch gekennzeichnet, dass** sich die kontinuierliche und die diskontinuierliche Verteilung des Verteilgut unterscheiden, durch,
- eine unterschiedliche Anzahl an aktivierten Verteilelemente (22) und/oder
- eine unterschiedliche Ausführung der aktivierten Verteilelemente (22) und/oder
- eine unterschiedliche Zeit in der die Verteilelemente (22) aktiviert sind und/oder
- eine unterschiedliche Ausbringmenge an Verteilgut je Flächeneinheit, und/oder
- eine unterschiedliche Breite der Auftrefffläche des Verteilgut auf der landwirtschaftlichen Nutzfläche (50).

5. Verteilmaschine (10) nach einem der vorherigen Ansprüche, **dadurch gekennzeichnet, dass** die Bestimmungseinrichtung (60) zur Bestimmung von Positionen von Kulturpflanzen (54), vorzugsweise von Positionen von Kulturpflanzenreihen (54a-54l) und/oder zur Bestimmung von Positionen einzelner oder gruppenweiser Schadbewuchspflanzen (56) eingerichtet ist,
- manuelle Bedienereingaben zu verarbeiten und/oder
- Ausgangssignale von Sensoranordnungen zu verarbeiten und/oder
- optische Anzeigen von optischen Erfassungseinrichtungen zu verarbeiten und/oder
- Ausgangssignale eines Positionsbestimmungssystem zu verarbeiten.

6. Verteilmaschine (10) nach einem der vorherigen Ansprüche, **dadurch gekennzeichnet, dass** die Bestimmungseinrichtung (60) zur Bestimmung von Kulturpflanzen (54), insbesondere von Kulturpflanzenreihen (54a-54l) und/oder einzelner oder gruppenweiser Schadbewuchspflanzen (56) eingerichtet ist, unterschiedliche Farbtöne zu detektieren.

7. Verteilmaschine (10) nach einem der vorherigen Ansprüche, **dadurch gekennzeichnet, dass** die Bestimmungseinrichtung (60) eingerichtet ist, zur Bestimmung einzelner oder gruppenweiser Schadbewuchspflanzen (56), eine Gesamtgröße der Schadbewuchspflanzen (56) zu bestimmen, wobei die Steuereinrichtung vorzugsweise eingerichtet ist, basierend auf der Gesamtgröße die Verteilelemente (56) die in Fahrtrichtung entlang der Zwischenräume bewegt werden einzeln oder gruppenweise zu steuern.

8. Verteilmaschine (10) nach einem der vorherigen Ansprüche, **dadurch gekennzeichnet, dass** die Steuereinrichtung eingerichtet ist, anhand einer bestimmten Position einzelner oder gruppenweiser Schadbewuchspflanzen (56) die sich in den Zwischenräumen befinden und durch eine Berechnung der Lage dieser Positionen gegenüber den am Verteilgestänge (18) angeordneten Verteilelementen (22) die Verteilelemente (22) einzeln oder gruppenweise und diskontinuierlich zu steuern, mittels der die bestimmten Schadbewuchspflanzen (56) zumindest weitgehend ganzflächig mit Verteilgut bedeckt werden.

9. Verteilmaschine (10) nach einem der vorherigen Ansprüche, **dadurch gekennzeichnet, dass** zur kombinierten Verteilung des Verteilgut während einer Überfahrt, bei einer Fahrt in Fahrtrichtung (FR)
- entlang der Kulturpflanzenreihen (54a-54l) dauerhaft die gleichen Verteilelemente (22) mittels der Steuereinrichtung kontinuierlich oder diskontinuierlich steuerbar sind und/oder
- entlang der Zwischenräume in Längserstreckung (L) des Verteilgestänge (18) mittels der Steuereinrichtung wechselnde Verteilelemente (22) diskontinuierlich steuerbar sind.

10. Verteilmaschine (10) nach einem der vorherigen Ansprüche, **dadurch gekennzeichnet, dass** zur Versorgung der Verteilelemente (22) mit dem Verteilgut, die Verteilelemente (22) die in Fahrtrichtung (FR) entlang der Kulturpflanzen (54) bewegt werden zumindest mit einem ersten Leitungssystem (30; 32) und die Verteilelemente (22) die in Fahrtrichtung entlang der Zwischenräume bewegt werden zumindest mit einem zweiten Leitungssystem (30; 34) wirktechnisch gekoppelt sind, wobei die Leitungssysteme (30; 32; 34) jeweils mittels einer, mittels der Steuereinrichtung steuerbaren und/oder regelbaren Fördereinrichtung (36) mit einem veränderbaren Förderdruck beaufschlagbar sind.

11. Verteilmaschine (10) nach Anspruch 10, **dadurch gekennzeichnet, dass** der Förderdruck in den Leitungssystemen (30; 32; 34) unterschiedlich ist, vorzugsweise im ersten Leitungssystem (30; 32) größer oder kleiner ist als der Förderdruck im zweiten Leitungssystem (30; 34), wobei den Leitungssystemen (30; 32; 34) jeweils zumindest eine Messeinrichtung (38) zugeordnet ist und die Steuereinrichtung dazu eingerichtet ist, den Förderdruck in den Leitungssystemen (30; 32; 34) anhand eines Ausgangssignals der Messeinrichtung (38) zu steuern.

12. Verteilmaschine (10) nach zumindest einem der Ansprüche 10 oder 11, **dadurch gekennzeichnet, dass**
- das Verteilgut im Leitungssystem (30; 32; 34) durch ein Direkteinspeisesystem erzeugt wird, vorzugsweise dass das Verteilgut im ersten Leitungssystem (30; 32) und/oder im zweiten Leitungssystem (30; 34) durch ein Direkteinspeisesystem erzeugt wird,
und/oder
- dass das Leitungssystem (30; 32; 34) als Ringleitungssystem ausgeführt ist, vorzugsweise das erste Leitungssystem (30; 32) und/oder das zweite Leitungssystem (30; 34) als Ringleitungssystem ausgeführt sind.

13. Verteilmaschine (10) nach zumindest einem der Ansprüche 10 bis 12, **dadurch gekennzeichnet, dass** die Verteilelemente (22) jeweils mit den Leitungssystemen (30; 32; 34) vorzugsweise mit dem ersten Leitungssystem (30; 32) und dem zweiten Leitungssystem (30; 34) gekoppelt sind, wobei die Steuereinrichtung mittels der Steuereinrichtung steuerbare und/oder regelbar Ventile umfasst und die Steuereinrichtung eingerichtet ist, die Ventile derartig zu steuern und/oder zu regeln um die Verteilelemente (22) mit dem Verteilgut des ersten Leitungssystem (30; 32) und/oder dem zweiten Leitungssystem (30; 34) zu versorgen.

14. Verteilmaschine (10) nach einem der vorherigen Ansprüche, **dadurch gekennzeichnet, dass** die Steuereinrichtung dazu eingerichtet ist, dass insofern keine Bestimmung von Kulturpflanzenreihen (54a-54l) und/oder von Schadbewuchspflanzen (56) mittels der Bestimmungseinrichtung (60) möglich ist, die Verteilelemente (22) derartig zu steuern, dass eine ganzflächige Applikation des Verteilgut auf die landwirtschaftliche Nutzfläche (50) ausgeführt wird, vorzugsweise eine Kulturpflanzenreihen (54a-54l) und/oder Schadbewuchspflanzen unabhängige Verteilung des Verteilgut ausgeführt wird.

15. Verfahren zum Ausbringen von landwirtschaftlichem Verteilgut, vorzugsweise ausgeführt mit einer landwirtschaftlichen Verteilmaschine (10), insbesondere mittels einer Feldspritze oder einem pneumatischen Düngerstreuer, mit den Schritten:
- Ausbringen von Verteilgut auf einer landwirtschaftlichen Nutzfläche (50) mittels einer Vielzahl von Verteilelementen (22) welche beabstandet zueinander entlang einer Längserstreckung (L) eines Verteilgestänge (18) an diesem angeordnet sind,
- Bestimmen von Positionen von Kulturpflanzen (54), vorzugsweise von Positionen von Kulturpflanzenreihen (54a - 54l) auf der landwirtschaftlichen Nutzfläche (50) sowie Bestimmen von Positionen einzelner oder gruppenweiser Schadbewuchspflanzen (56), die sich vorzugsweise in Zwischenräumen zwischen zwei quer zur Fahrtrichtung (FR) benachbarten und in Fahrtrichtung (FR) verlaufenden Kulturpflanzenreihen (54a - 54l) befinden, mittels einer Bestimmungseinrichtung (60)
- Steuern der Verteilung mittels der Verteilelemente (22) durch eine Aktivierung oder Deaktivierung von Verteilelementen (22) mittels einer Steuereinrichtung,
**gekennzeichnet durch**, eine derartige Ansteuerung der Verteilelemente (22) zur kombinierten Verteilung des Verteilgut während einer Überfahrt, dass
- durch die Verteilelemente (22) die in Fahrtrichtung (FR) entlang der Kulturpflanzen (54) bewegt werden, vorzugsweise entlang der Kulturpflanzenreihen (54a - 54l) bewegt werden, eine Verteilung von Verteilgut in Abhängigkeit der mittels der Bestimmungseinrichtung (60) bestimmten Positionen der Kulturpflanzen (54) wahlweise kontinuierlich oder diskontinuierlich erfolgt und
- dass durch einzelne oder gruppenweise Verteilelemente (22) die in Fahrtrichtung entlang der Zwischenräume bewegt werden in Abhängigkeit der mittels der Bestimmungseinrichtung (60) bestimmten Positionen der Schadbewuchspflanzen (56) eine Verteilung des Verteilgut diskontinuierlich erfolgt.

16. Verfahren nach Anspruch 15, **dadurch gekennzeichnet, dass** dieses mit einer landwirtschaftlichen Verteilmaschine (10) nach zumindest einem der Ansprüche 1 bis 14 ausführbar ist, insbesondere mit einer Feldspritze oder einem pneumatischen Düngerstreuer nach einem der Ansprüche 1 bis 14 ausführbar ist.
